(19) Europäisches Patentamt
European Patent Office
Office européen des brevets

(11) **EP 2 337 255 B1**

(12) **EUROPEAN PATENT SPECIFICATION**

(45) Date of publication and mention
of the grant of the patent:
**01.08.2012 Bulletin 2012/31**

(51) Int Cl.:
***H04J 14/02*** *(2006.01)*

(21) Application number: **09179319.0**

(22) Date of filing: **15.12.2009**

(54) **Fusible single use optical beam shutter**

Schmelzbare Blende für optischen Strahl zur einmaligen Verwendung

Obturateur de faisceau optique à fusible à utilisation unique

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**22.06.2011 Bulletin 2011/25**

(73) Proprietor: **Alcatel Lucent
75007 Paris (FR)**

(72) Inventor: **Templ, Wolfgang
74372, Sersheim (DE)**

(74) Representative: **Wetzel, Emmanuelle
Alcatel Lucent
Intellectual Property & Standards
70430 Stuttgart (DE)**

(56) References cited:
**US-A1- 2007 092 256     US-A1- 2009 304 388**

**Description**

The invention relates to an Optical Network Unit device (ONU) of a Wavelength Division Multiplexing (WDM)-type Passive Optical Network (PON) and a method for wavelength adjustment of an ONU device.

Generally, Passive Optical Networks (PONs) comprise passive optical components, e.g., fibers, splitters, and couplers that are provided to guide traffic between a Central Office (CO) and remote Optical Network Units (ONUs) located at customer premises. The passive optical components are devices that operate to pass or restrict light. Passive optical networks that use Wavelength Division Multiplexing (WDM) technologies use light sources which are characterized by specific wavelengths. In such WDM type PONs, a specific wavelength is allocated to each ONU, i.e., the light source of the ONU must only emit light of the allocated wavelength for its uplink communication. If the ONU uses a light source that is tunable in its transmitting wavelength for optical signals, e.g. a tunable laser, the transmitting wavelength of the optical transmitter needs to be tuned to the allocated wavelength before the ONU can be used for communication in the WDM PON.

US 2007/0092256 A1 discloses a WDM-type PON system, wherein a central OLT allocates a specific wavelength to an ONU upon receiving a wavelength allocation request message of the ONU. The ONU which comprises an optical transmitter variable in its transmitting wavelength for upstream optical signals adjusts its transmitting wavelength based on the assigned wavelength from the OLT.

US 2009/304388 A1 discloses an optical blocking unit at a position near an ONU-side optical splitter of an optical branching unit for blocking input of an extraordinary optical signal in a WDM-PON system.

However, during the *in situ* wavelength adjustment procedure of the ONU at subscriber premises, the tunable light source can emit light at "forbidden" wavelengths which are not allocated to the ONU module, thus, interfering with the ongoing communication of other parties within the network. Hence, there is the need to avoid such an "optical contamination" of fiber plant in WDM-type PON systems during the wavelength adjustment procedure of an *in situ* tunable light source. As an ONU product is targeting a mass market, a solution to the above problem should to be implemented at low cost.

In view of the above problems of the prior art, there is a need to provide an ONU device that is capable of adjusting its wavelength without emitting light at "forbidden" wavelengths into the PON during the wavelength adjustment procedure. This need is resolved by the subject-matter according to the independent claims. The dependent claims refer to preferred embodiments of the invention.

According to an aspect, an Optical Network Unit device (ONU) for a Wavelength Division Multiplexing (WDM)-type Passive Optical Network (PON) having an optical transmitter tunable in its transmitting wavelength for optical signals and a fusible optical beam shutter is proposed. An optical transmitter tunable in its transmitting wavelength for optical signals may in particular be a tunable laser, the output wavelength of which can be tuned. An optical beam shutter in the context of the invention can absorb or reflect the light of the optical transmitter to prevent the light from entering the PON. An optical network unit (ONU) in the context of this invention converts optical signals transmitted via fiber to electrical signals and vice versa. ONUs are commonly used e.g. at customer premises in the Fiber-to-the-Home (FTTH), or Fiber-to-the-Curb (FTTC) applications.

According to a further aspect, the fusible optical beam shutter is positioned in the ONU to block an optical path of the optical transmitter during tuning the wavelength of the optical transmitter to a pre-determined value. According to a further aspect of the invention, the ONU may further comprise means for fusing the optical beam shutter to open the optical path. By way of example, the optical beam shutter can be fused by means of an electrical current that dissipates electrical energy in the beam blocking region that causes the optical beam shutter to melt or vaporize. Preferably, the optical beam shutter is inserted into a laser module of the ONU to block the optical path of the outgoing laser beam.

Dimensions and geometry of the fusible optical beam shutter are determined so that the major part of electrical energy that is applied to the optical beam shutter is dissipated in the beam blocking region, i.e., width and thickness of feeding conductors need to be sufficient, i.e., to provide the supply of the fusing current to the narrow and thin fusing element structure in the beam line. According to a further aspect, the optical beam shutter may be a thin metal plate. By way of example, the optical beam shutter may be a thin reed or plate of metal of low-melting temperatures which is fusible by means of an electrical current, if the electrical current is applied to the thin metal plate. The thin metal may be arranged in the optical path of the optical transmitter. A low metal melting temperature may be a temperature of below 1000°C, e.g. 660 °C for Aluminum. According to a further aspect of the invention, the electrical current may be applied by electrical contacts at opposing edges of the thin metal plate.

According to a further aspect, the ONU may comprise a control unit for applying a current to the optical beam shutter after the completion of a wavelength tuning procedure. The control unit may, upon receiving a signal which is indicating that the wavelength adjustment procedure is completed, apply a voltage to the optical beam shutter to trigger an electrical current that flows through the optical beam shutter and may disconnect the electrical voltage applied to the beam shutter after the fusing of beam shutter is completed. According to a further aspect, a surface area of the thin metal plate is slightly greater than the cross-section of the optical beam of the optical light source. Slightly greater in the context of this invention means that the diameter of the thin metal plate is greater than the diameter of the beam cross-section but lies in the same order of magnitude. By way of example, if a laser beam has a width of 10 $\mu$m, then the diameter of the thin metal plate may be also in the $\mu$m- range, e.g. 12 - 20 $\mu$m. Preferably, the surface area of the thin metal plate facing the optical beam of the tunable laser is x*b, wherein b is the surface area of the beam and x is < 5. In other words, a safety margin is preferably added to the minimal size defined by the cross-section of a beam to account for potential positioning inaccuracies when installing the thin metal plate in the optical path and for the space needed to attach electrical contacts to the thin metal plate. A thin metal plate that is only slightly larger than the cross-section of the optical beam also reduces the size of the current required for melting the plate and reduces the risk of not fully removing the thin metal plate during the melting process at the cross-section of the beam. The skilled person may choose the dimensions of the optical beam shutter subject to the geometries of the optical transmitter as well as the focusing optics and distances between the laser and the uplink fiber of the ONU.

Moreover it may be necessary to keep the amount of vaporized material minimal in order to avoid or minimize potential contamination of optical system with sublimates.

In other words, on the one hand, the surface area of the thin metal plate facing the optical beam of the tunable laser should be as large as necessary to block any light emitted from the laser during a wavelength adjustment procedure from entering the optical fiber connected to the PON. One the other hand, the surface are of the thin metal plate should be as small as possible to reduce the size of the current required for melting the plate and to ensure that the melting process fully opens the optical path towards the PON.

According to a further aspect, the thin metal plate may have the highest resistance at the area where the light emitted from the laser hits the thin metal plate. This is advantageous in that it ensures that the metal plate is fused exactly where the laser beam hits the metal plate and not above or below near the electrical contacts. In order to ensure that the thin metal plate has the highest resistance at the area where the light emitted from the laser hits the plate, the thin metal plate may have for example a flat dumbbell-shaped form or sandglass-shaped form, with a flat narrower portion in the middle, the narrower portion being hit by the laser light. Another example can be a metal plate with a thickness that is thinner in the middle portion than in the portion connected to the electrical contact.

It is therefore an advantage of the invention that the fusible optical beam shutter optically decouples the ONU from the PON during a wavelength adjustment procedure. Thus, no optical contamination of the fiber plant connected to the ONU occurs during wavelength adjustment of the *in situ* tunable laser. Furthermore, a fusible optical beam shutter such as a thin metal plate enables a very cost-effective solution, since no human presence or labor effort is required during the adjustment procedure. Furthermore, in contrast to potential integrated MEMS (Micro Electromechanical Systems) based solutions involving pivoted mirror elements to deflect an optical signal during a wavelength adjustment procedure, the solution based on a fusible optical beam shutter improves product reliability and lowers product costs as no complex movable and expensive components are required.

According to a further aspect, a method for configuring an Optical Network Unit device (ONU) of a Wavelength Division Multiplexing (WDM) type Passive Optical Network (PON) is proposed comprising the step of blocking an optical path of an optical transmitter tunable in its transmitting wavelength for optical signals by means of a fusible beam shutter. By way of example, the optical signals are for upstream communication. The method further comprises the steps of tuning the wavelength of the optical transmitter to a determined value and fusing the optical beam shutter to open the optical path of the optical transmitter after the wavelength of the optical transmitter is tuned to a determined value. Preferably, in the step of fusing the optical beam shutter, a current is applied to the thin metal plate until at least the area of the thin metal plate that has been blocking the optical path of the optical transmitter is fused.

The invention is explained below in an exemplary manner with reference to the accompanying drawings, wherein

Fig. 1    illustrates a schematic diagram of a WDM PON system;

Fig. 2A    illustrates schematically an in situ tunable laser and a fusible single use optical beam shutter of an ONU during a wavelength tuning process of the laser according to an embodiment of the invention;

Fig. 2B    illustrates schematically an in situ tunable laser and a fusible single use beam shutter of an ONU during a fusing process of the beam shutter according to an embodiment of the invention;

Fig. 2C    illustrates schematically an in situ tunable laser of an ONU after a fusing process of the beam shutter according to an embodiment of the invention;

Fig. 3    shows a flow diagram of steps involved in tuning a wavelength of an ONU laser according to an embodiment of the invention.

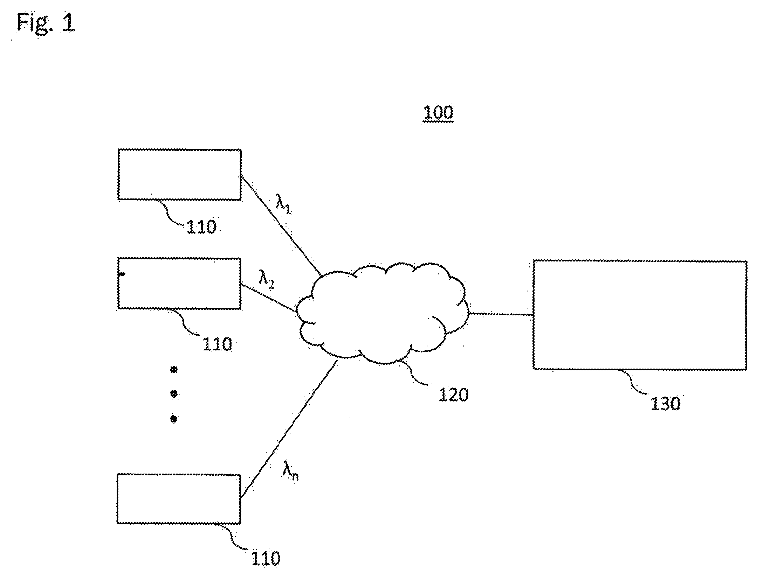

Fig. 1 illustrates a schematic diagram of an embodiment of a WDM PON system 100. The PON 100 may include an OLT 130, an ODN 120, and a plurality of ONUs 110. The PON 100 is a communication network that does not require any active components to distribute data between the OLT 130 and the ONUs 110. Instead, the PON 100 uses passive optical components in the ODN 120 to distribute data between the OLT 130 and the ONUs 110.

One component of the PON 100 may be the OLT 130. The OLT 130 may be any device that is configured to communicate with the ONUs 110. Specifically, the OLT 130 may act as an intermediary between another network (not shown) and the ONUs 110 in that the OLT 130 forwards data received from the other network to the ONUs 110, and forwards data received from the ONUs 130 onto the other network. The OLT 130 described herein is typically located at a central location, such as a central office, but may be located at other locations as well.

Another component of the PON 100 may be the ONUs 110. The ONUs 110 may be any terminating devices that are configured to communicate with the OLT 130 and a customer or user (not shown). Specifically, the ONUs may act as an intermediary between the OLT 130 and the customer in that the ONUs 110 forward data received from the OLT 130 to the customer, and forward data received from the customer onto the OLT 130. The ONUs are typically located at distributed location, such as the customer premises, but may be located at other locations as well.

Another component of the PON 100 may be the ODN 120. The ODN 120 is a data distribution system comprised of optical fiber cables, couplers, splitters, distributors and/or other equipment known to persons of ordinary skill in the art. In an embodiment, the optical fiber cables, couplers, splitters, distributors, and/or other equipment known to persons of ordinary skill in the art are passive optical components.

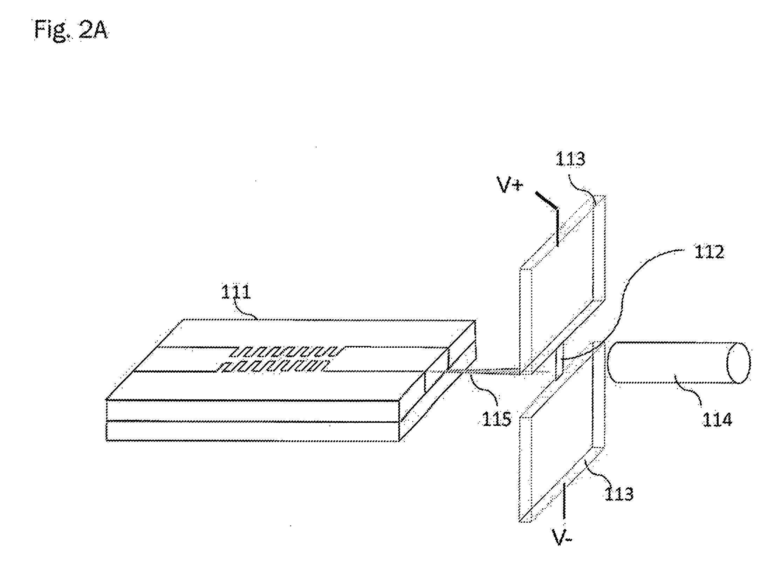

Fig. 2A illustrates schematically an in situ tunable laser and a fusible semi-used beam shutter of an ONU 110 during a wavelength tuning process of the laser according to an embodiment of the invention.

Fig. 2A shows the main components of the invention, i.e. an in situ tunable laser 111, a fusible thin metal plate 112, electrical contacts 113 and an optical path (e.g. fiber) 114 of an ONU 110. In order to highlight the key elements of the invention, the other components of an ONU such as a downstream receiver, an upstream transmitter and driver, an upstream signal processing circuit or a downstream signal processing circuit, upstream and downstream data buffers, etc., are not shown and are known from prior art ONU devices.

The ONU and the laser source 111 need to be configured to emit light of a particular dedicated wavelength. The in situ tunable laser 111 is a laser whose wavelength of operation can be altered in a controlled manner. Typically, the tuning of the ONU wavelength occurs during installation of the ONU at the customer site. A dedicated wavelength for the ONU may be assigned by the network operator. For example, a network operator may allocate a dedicated wavelength to a new customer who enters the allocated value of the wavelength at his ONU for the tuning process.

During the *in situ* wavelength adjustment procedure of the laser 111, the laser can emit light at "forbidden" wavelengths which do not correspond to the dedicated wavelength of the particular ONU. In order to prevent that light at these "forbidden" wavelengths can enter the PON via the optical fiber 114 with which the ONU is connected to the PON, a thin aluminum plate 112 is placed in the optical path of the laser 111 so that it blocks the light 115 emitted by the laser, For example, a thin aluminum plate 112 with a diameter 15 $\mu$m is used to block the light of the laser 111 with a beam width of approximately 10$\mu$m.

Two opposing edges of the thin Aluminum plate 112 are connected with broad electrical contacts 113. During the installation procedure of the ONU 110, in particular during the wavelength adjustment procedure of the laser 111, no current flows through the thin metal plate 112.

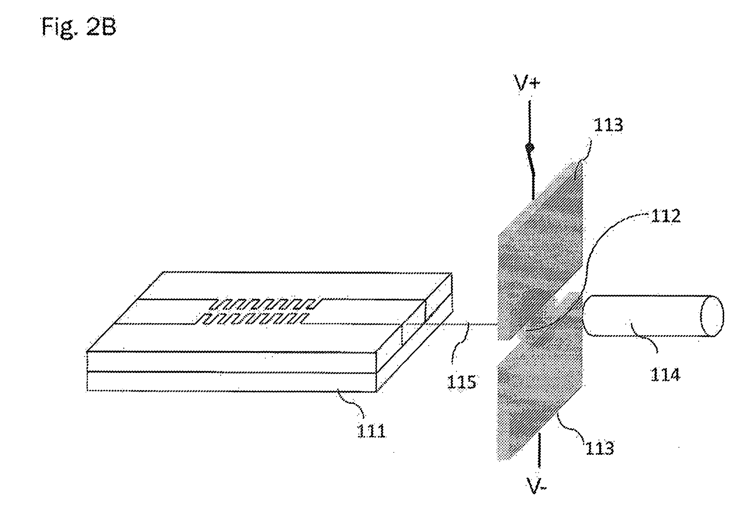

After the wavelength adjustment procedure is completed for the laser 111, an electrical current is applied via the electrical contacts 113 to melt the thin metal plate 112 in order to open the optical path so that the light emitted from the laser 111 at the dedicated wavelength of the laser can enter the optical fiber 114. This is schematically illustrated in Fig. 2B, wherein the melting of the thin aluminum plate 112 by applying a current of, e.g. 100 mA is shown.

The dimensions and the geometry of the thin metal plate 112 need to guarantee that the major part of electrical energy is dissipated in the beam blocking region, i.e. width and thickness of feeding conductors need to be sufficient, i.o., to guarantee the supply of the fusing current to the narrow and thin fusing element structure in the beam line. The laser of the embodiment typically emits light with a beam width of approximately 10 $\mu$m. In the embodiment, the width of the thin aluminum plate 112 of 15 $\mu$m is sufficient to block the light of the laser beam that has a cross-section of 10 $\mu$m.

The current required to fuse the structure 112 can be calculated using Preece's formula: Assuming a beam width of approximately 10 $\mu$m to be locked and a blocking element of width d=15 $\mu$m, the required fusing current (I) can be estimated according to Preece's formula:

$$I = k*d^{\wedge}(3/2), \text{ d in cm, k is a material-specific coefficient,}$$

to be ~ 100 mA (with k=1870 for aluminum). Though the formula is intended to describe cylindrical structures (wires), it can be used as an estimate for flat structures. If the geometry of the structure is increased by a factor x, critical current will increase by $x^{3/2}$. The current has to be high enough to guarantee that feeding conductors can supply the fusing current being necessary to melt the beam blocking section.

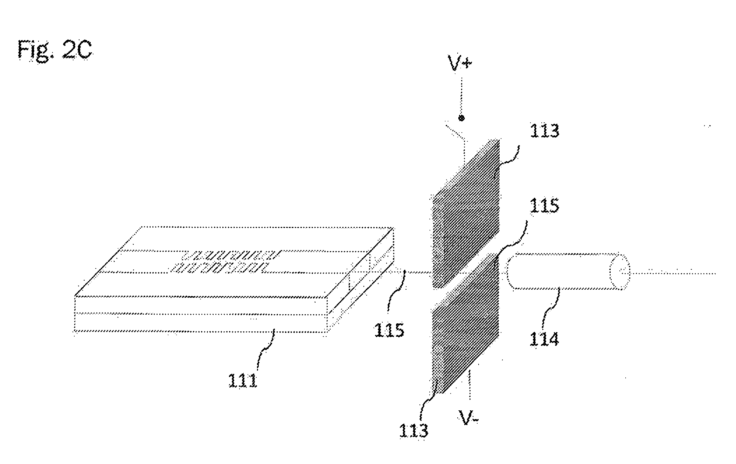

Fig. 2C illustrates schematically a laser of an ONU 110 after a fusing process where the beam shutter 112 has been melted by applying the current via the electrical contacts 113 and the applied voltage V+ has been switched off. The laser beam 115 can now enter the optical fiber 114.

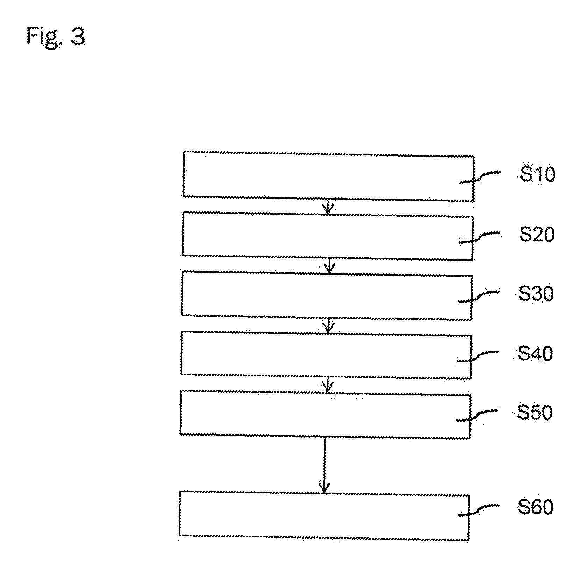

Fig. 3 shows a flow diagram of steps involved in tuning wavelengths of an ONU laser according to an embodiment of the invention. Before an ONU 110 with a tunable light source 111 can be operated in a WDM type PON, the wavelength of the tunable laser 111 has to be adjusted to a determined wavelength that has been allocated to the ONU device 111. This kind of wavelength adjustment of the ONU device 110 has to be conducted usually only once before a user starts using the device 110. In step S10, a tuning mode of the ONU 110 is started. A tuning mode is not the normal mode of operation of the ONU 110, but an installation mode, wherein the wavelength of the tunable laser 111 is tuned to the allocated wavelength. Then, in step S20, the laser source 111 is activated, but any light emitted by the laser is blocked by a fusible beam shutter 112 so that no light from the laser 111 enters an optical path, e.g. fiber, connecting the ONU with the WDM type PON. In step S30, the wavelength of operation of the tunable laser 111 is altered in a controlled manner until the allocated wavelength is reached. After the wavelength of the tunable laser has been set to the allocated wavelength, a current is applied in Step S40 to the thin aluminum plate 112 by applying a current to the thin metal plate 112 via the two contacts 113. The applied current causes the thin plate 112 to be melted so that light emitted by the laser 111 can enter the optical path 114.

As soon as the shutter has fused, the electrical supply to the electrical contacts 113 can be switched off in step S50. With step S50, the wavelength adjustment procedure is completed. Then, in step S60, a normal operation mode of the ONU can be started.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

In particular, it should be noted that the invention is not restricted solely to ONU devices and WDM-type PON networks and that the present invention may also applied to fields other than telecommunications. For example, the concept of blocking an optical path by means of a fusible optical beam shutter may be applied to any field or device that requires a temporary blocking of an optical path. It may also be applied to any field that requires a "first light" function such as sensors in a delivery status that are initiated remotely and the properties of which are changed by illumination.

**Claims**

1. An Optical Network Unit device (ONU) (110) for a Wavelength Division Multiplexing (WDM) type Passive Optical Network (PON) (110) comprising

   - an optical transmitter (111) tunable in its transmitting wavelength for optical signals; and **characterised by**
   - a fusible optical beam shutter; wherein the fusible optical beam shutter is positioned in the ONU (110) to block an optical path of the optical transmitter (111) during tuning the wavelength of the optical transmitter to a predetermined value.

2. An ONU (110) according to claim 1, wherein the ONU (110) further comprises means for fusing the optical beam shutter to open the optical path.

3. An ONU according to claim 2 wherein the optical beam shutter is a thin metal plate (112) arranged in the optical path of the optical transmitter (111).

4. An ONU according to claim 3 wherein the thin metal plate (112) has a low melting temperature and is fusible by means of an electrical current.

5. An ONU according to claim 3 wherein the thin metal plate (112) is fusible by means of an electrical current.

6. An ONU according to claim 3 wherein a surface area of the thin metal plate is slightly greater than the cross-section of a beam of the optical signal.

7. An ONU according to claim 3 wherein the electrical current is applied by electrical contacts (113) at opposing edges of the thin metal plate (112).

8. An ONU according to claim 3 wherein a resistance of the thin metal plate (112) is highest at the area where the optical signal of the optical transmitter (111) hits the thin metal plate (112).

9. An ONU according to claim 4 wherein a geometry of the thin metal plate (112) causes the majority of the electrical current to dissipate in a region of the thin plate that is blooking the optical path.

10. An ONU according to claim 3 wherein the thin metal plate (112) has a dumbbell-shaped form.

11. A method for configuring an Optical Network Unit device (ONU) (110) for a Wavelength Division Multiplexing (WDM) type Passive Optical Network (PON) (100), the method being **characterised by**

   - blocking an optical path of an optical transmitter (111) tunable in its transmitting wavelength for optical signals by means of a fusible optical beam shutter;
   - tuning the wavelength of the optical transmitter (111) to a determined value;
   - fusing the optical beam shutter to open the optical path of the optical transmitter (111) after the wavelength of the optical transmitter (111) is tuned to a determined value.

12. A method according to claim 11, wherein the fusible optical beam shutter (111) is a thin metal plate (112) positioned In the optical path of the optical transmitter (111).

13. A method according to claim 12, wherein the step of fusing the optical beam shutter further comprises the step of applying an electrical current to the optical beam shutter until at least the area of the optical beam shutter that has been blocking the optical path of the optical transmitter (111) is fused.

**Patentansprüche**

1. Optische Netzwerkeinheit- bzw. ONU-Vorrichtung (110) für ein passives optisches Netzwerk (PON) (110) vom Typ Wellenlängenmultiplex (WDM), umfassend:

   - Einen optischen Sender (111), welcher in seiner Sendewellenlänge für optische Signale abstimmbar ist; **gekennzeichnet durch**
   - eine schmelzbare Blende für optischen Strahl; wobei die schmelzbare Blende für den optischen Strahl in der ONU (110) positioniert ist, um während des Abstimmens der Wellenlänge des optischen Senders (111) einen optischen Pfad des optischen Senders auf einen vorgegebenen Wert zu sperren.

2. ONU (110) nach Anspruch 1, wobei die ONU (110) weiterhin Mittel zum Schmelzen der Blende für den optischen Strahl umfasst, um den optischen Pfad zu öffnen.

3. ONU nach Anspruch 2, wobei die Blende für den optischen Strahl eine in dem optischen Pfad des optischen Senders (111) angeordnete dünne Metallplatte (112) ist.

4. ONU nach Anspruch 3, wobei die dünne Metallplatte (112) eine niedrige Schmelztemperatur hat und mittels eines elektrischen Stroms schmelzbar ist.

5. ONU nach Anspruch 3, wobei die dünne Metallplatte (112) mittels eines elektrischen Stroms schmelzbar ist.

6. ONU nach Anspruch 3, wobei ein Oberflächenbereich der dünnen Metallplatte etwas größer als der Querschnitt eines Strahls des optischen Signals ist.

7. ONU nach Anspruch 3, wobei der elektrische Strom durch elektrische Kontakte (113) an den sich gegenüberliegenden Kanten der dünnen Metallplatte (112) angelegt wird.

8. ONU nach Anspruch 3, wobei ein Widerstand der dünnen Metallplatte (112) in dem Bereich, in welchem das optische Signal des optischen Senders (111) auf die dünne Metallplatte (112) aufprallt, am höchsten ist.

9. ONU nach Anspruch 4, wobei eine Geometrie der dünnen Metallplatte (112) verursacht, dass der Hauptanteil des elektrischen Stroms in einem Bereich der dünnen Platte, welcher den optischen Pfad sperrt, abgeleitet wird.

10. ONU nach Anspruch 3, wobei die dünne Metallplatte (112) eine hantelähnliche Form aufweist.

11. Verfahren zum Konfigurieren einer optischen Netzwerkeinheit- bzw. ONU-Vorrichtung (110) für ein passives optisches Netzwerk (PON) (100) vom Typ Wellenlängenmultiplex (WDM), wobei das Verfahren **gekennzeichnet ist durch**

- Sperren eines optischen Pfads eines optischen Senders (111), welcher mittels einer schmelzbaren Blende für den optischen Strahl in seiner Sendewellenlänge für optische Signale abstimmbar ist;
- Abstimmen der Wellenlänge des optischen Senders (111) auf einen vorgegebenen Wert;
- Schmelzen der Blende für den optischen Strahl, um den optischen Pfad des optischen Senders (111) zu öffnen, nachdem die Wellenlänge des optischen Senders (111) auf einen vorgegebenen Wert abgestimmt wurde.

12. Verfahren nach Anspruch 11, wobei die schmelzbare Blende für den optischen Strahl (111) eine in dem optischen Pfad des optischen Senders (111) angeordnete dünne Metallplatte (112) ist.

13. Verfahren nach Anspruch 12, wobei der Schritt des Schmelzens der Blende für den optischen Strahl weiterhin den Schritt des Anlegens eines elektrischen Stroms an der Blende für den optischen Strahl, bis zumindest der Bereich der Blende für den optischen Strahl, welcher den optischen Pfad des optischen Senders (111) gesperrt hat, geschmolzen ist, umfasst.

**Revendications**

1. Unité de réseau optique (ONU) (110) pour un réseau optique passif (PON) de type multiplexage par répartition en longueur d'onde (WDM) (110) comprenant :

- un émetteur optique (111) dont la longueur d'onde d'émission pour des signaux optiques est accordable ; et **caractérisée par**
- un obturateur de faisceau optique fusible ; dans laquelle l'obturateur de faisceau optique fusible est positionné dans l'ONU (110) pour bloquer un trajet optique de l'émetteur optique (111) durant l'accordage de la longueur d'onde de l'émetteur optique selon une valeur prédéterminée.

2. ONU (110) selon la revendication 1, dans laquelle l'ONU (110) comprend en outre des moyens pour fusionner l'obturateur de faisceau optique pour ouvrir le trajet optique.

3. ONU selon la revendication 2 dans laquelle l'obturateur de faisceau optique est une fine plaque métallique (112) disposée dans le trajet optique de l'émetteur optique (111).

4. ONU selon la revendication 3 dans laquelle la fine plaque métallique (112) possède une faible température de fusion et est fusible au moyen d'un courant électrique.

5. ONU selon la revendication 3 dans laquelle la fine plaque métallique (112) est fusible au moyen d'un courant électrique.

6. ONU selon la revendication 3 dans laquelle une surface de la fine plaque métallique est légèrement supérieure à la section transversale d'un faisceau du signal optique.

7. ONU selon la revendication 3 dans laquelle le courant électrique est appliqué par contacts électriques (113) à des côtés opposés de la fine plaque métallique (112).

8. ONU selon la revendication 3 dans laquelle une résistance de la fine plaque métallique (112) est la plus élevée au niveau de la zone où le signal optique de l'émetteur optique (111) frappe la fine plaque métallique (112).

9. ONU selon la revendication 4 dans laquelle une géométrie de la fine plaque métallique (112) entraîne la dissipation de la majorité du courant électrique dans une région de la fine plaque qui bloque le trajet optique.

10. ONU selon la revendication 3 dans laquelle la fine plaque métallique (112) a une forme d'haltère.

**11.** Procédé de configuration d'une unité de réseau optique (ONU) (110) pour un réseau optique passif (PON) (100) de type multiplexage par répartition en longueur d'onde (WDM), le procédé étant **caractérisé par** les étapes suivantes :

bloquer un trajet optique d'un émetteur optique (111) dont la longueur d'onde d'émission pour des signaux optiques est accordable au moyen d'un obturateur de faisceau optique fusible ;

- accorder la longueur d'onde de l'émetteur optique (111) selon une valeur déterminée ;
- fusionner l'obturateur de faisceau optique pour ouvrir le trajet optique de l'émetteur optique (111) après avoir accordé la longueur d'onde de l'émetteur optique (111) selon une valeur déterminée.

**12.** Procédé selon la revendication 11, dans lequel l'obturateur de faisceau optique fusible (111) est une fine plaque métallique (112) positionnée dans le trajet optique de l'émetteur optique (111).

**13.** Procédé selon la revendication 12, dans lequel l'étape de fusion de l'obturateur de faisceau optique comprend en outre l'étape d'application d'un courant électrique sur l'obturateur de faisceau optique jusqu'à ce qu'au moins la zone de l'obturateur de faisceau optique, qui a bloqué le trajet optique de l'émetteur optique (111), soit fusionnée.

Fig. 1

Fig. 2A

112

114

113

113

V+

V-

115

111

Fig. 2B

Fig. 2C

Fig. 3

EP 2 337 255 B1

**EP 2 337 255 B1**

**Patent documents cited in the description**

- US 20070092256 A1
- US 2009304388 A1